(19) Europäisches Patentamt
European Patent Office
Office européen des brevets

(11) **EP 4 649 829 A1**

(12) **EUROPÄISCHE PATENTANMELDUNG**

(43) Veröffentlichungstag:
**19.11.2025 Patentblatt 2025/47**

(21) Anmeldenummer: **24175928.1**

(22) Anmeldetag: **15.05.2024**

(51) Internationale Patentklassifikation (IPC):
**A23C 11/10** (2025.01)     **A23L 7/104** (2016.01)

(52) Gemeinsame Patentklassifikation (CPC):
**A23L 7/107; A23C 11/103**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Bühler AG**
**9240 Uzwil (CH)**

(72) Erfinder:
• **Saeed, Tirhaga**
**9240 Uzwil (CH)**
• **Kirckof, Isabelle**
**9246 Niederbüren (CH)**
• **Tabellion, Frank**
**66123 Saarbrücken (DE)**
• **Hannsbauer, Mathias**
**9000 St. Gallen (CH)**

(74) Vertreter: **Hepp Wenger Ryffel AG**
**Friedtalweg 5**
**9500 Wil (CH)**

(54) **PFLANZLICHES MILCHERSATZPRODUKT**

(57)     Die vorliegende Erfindung betrifft ein Verfahren zur Herstellung eines pflanzenbasierten Milchersatzproduktes mit einen Feststoffanteil im Bereich von 30-70%, bezogen auf das Gesamtgewicht des pflanzenbasierten Milchersatzproduktes, umfassend die Schritte der Trockenvermahlung eines pflanzenbasierten Ausgangsmaterials; der Herstellung einer wässrigen Suspension des trockenvermahlten Materials in Wasser unter Rühren bei einer Temperatur im Bereich von 20 bis 60°C in Gegenwart eines Enzyms; und der Nassvermahlung der erhaltenen Suspension bei einer Temperatur unterhalb von 60°C und einem Druck von weniger als 3 bar. Die vorliegende Erfindung betrifft weiterhin ein Pflanzenbasiertes Milchersatzprodukt mit einen Feststoffanteil im Bereich von 30-70%, welches mit diesem Verfahren erhältlich ist.

Fig. 1

**Beschreibung**

Die vorliegende Erfindung betrifft ein pflanzliches Milchersatzprodukt und ein Verfahren zu dessen Herstellung.

Pflanzliche Milchersatzprodukte auf Basis von Getreiden, Nüssen oder Hülsenfrüchten, wie ein Hafergetränk oder andere Sorten von Getreide-basierten Milchersatzgetränken, werden als Alternativen, beispielsweise bei Bedarf nach laktosefreier oder veganer Ernährung, zu herkömmlicher Milch eingesetzt. Getreidemilch kann aus Reis (Reismilch), Hafer (Ein Hafergetränk), Dinkel, Hirse, Roggen, Einkorn oder Pseudogetreide wie Buchweizen gewonnen werden und ähnelt Kuhmilch in Aussehen und Konsistenz.

Bei der industriellen Herstellung von Getreidemilch wird üblicherweise entsprechendes Getreidemehl (oder alternativ Getreidekerne, Grütze oder Flocken), wie Hafermehl, mit Wasser und Enzymen vermischt, hydrolysiert und von festen Rückständen abgetrennt (vgl. z.B. https://fruitprocessingmachine.com/portfolioitems/oat-milk-processing-line/) .

Diese festen Rückstände, auch als Okara bezeichnet, werden als Seitenstrom aus dem Getreidemilch-Herstellungsprozess herausgeführt. Dies ist sowohl aus dem Blickwinkel der Verringerung der Produktsaubeute aus dem Ausgangsmaterial (es werden bis zu 30% Okara als Nebenstrom abgetrennt) als auch im Hinblick auf die Verringerung des Nährwerts des Produkts nachteilig. Durch die Abtrennung von Okara gehen wertvolle Nährstoffe wie β-Glucan, Fasern und Proteine verloren.

Da Okara einen hohen Nährwert hat, wird es in einem separaten Prozess in andere Produkte wie Tierfutter überführt. Dies ist aber aufwendig und ökonomisch sowie ökologisch nachteilig.

Es besteht daher ein Bedarf nach einer anderen Verfahrensführung, bei welcher kein Okara-Nebenstrom anfällt.

In der WO 2021/144005 A1 ist die Herstellung eines Milchersatzproduktes beschrieben, bei welchem eine Suspension aus entsprechendem pflanzlichen Ausgangsmaterial einer Hochdruck-Homogenisierung bei einem Druck von mindestens 800 bar unterzogen wird. Das Produkt wird hierbei sehr warm und beansprucht. Durch den hohen Druck, die hohen Scherkräfte und die Erwärmung kann es zu Strukturänderungen bis hin zur Denaturierung des Proteins kommen. Industriell ist dieses Verfahren nicht umsetzbar, wenn höhere Feststoffgehalte von mehr als 35 Gew.-% gewünscht sind.

Es war die Aufgabe der vorliegenden Erfindung, ein pflanzliches Milchersatzprodukt und ein Verfahren zu dessen Herstellung bereitzustellen, bei welchem kein schonend bei relativ niedrigen Temperaturen, Drücken und geringeren Scherkräften gearbeitet wird, kein Nebenstrom aus Okara anfällt und alle wichtigen Nährstoffe des Getreides im Produkt verbleiben.

Die vorstehende Aufgabe wird durch die vorliegende Erfindung gelöst.

Im Detail betrifft die vorliegende Erfindung ein Verfahren zur Herstellung eines pflanzenbasierten Milchersatzproduktes mit einen Feststoffanteil im Bereich von 30-70%, bezogen auf das Gesamtgewicht des pflanzenbasierten Milchersatzproduktes, umfassend die Schritte

a) Gegebenenfalls Trockenvermahlung eines pflanzenbasierten Ausgangsmaterials;
b) Herstellung einer wässrigen Suspension des trockenvermahlten Materials in Wasser unter Rühren bei einer Temperatur im Bereich von 20 bis 60°C in Gegenwart eines Enzyms;
c) Nassvermahlung der in Schritt b) erhaltenen Suspension bei einer Temperatur unterhalb von 60°C und einem Druck von weniger als 3 bar.

Es wurde erfindungsgemäss gefunden, dass ein pflanzliches Milchersatzprodukt, gegebenenfalls nach einer Trockenvermahlung, in Wasser eingeweicht und enzymatisch behandelt und anschliessend einer Nassvermahlung unterzogen kann, wodurch die sonst als Okara anfallenden Feststoffe auf eine für den Getränkeverzehr geeignete Grösse verringert werden. Das derart hergestellte pflanzliche Milchersatzprodukt hat einen höheren Nährwert als herkömmliche pflanzliche Milchersatzprodukte und gleichzeitig ein angenehmes und cremiges Mundgefühl.

Zudem weist das erfindungsgemässe pflanzliche Milchersatzprodukt eine hohe Lagerstabilität und Verdünnbarkeit auf.

Das erfindungsgemässe Verfahren erreicht mit der Kombination von am wenigsten prozessierten Rohmaterial und Nassvermahlung die effizienteste Lösung in Bezug auf Energie und Nachhaltigkeit. Zudem wurde gefunden, dass der Feststoffgehalt im Milchersatzprodukt mittels des erfindungsgemässen Verfahrens auf einen Bereich von 30-70%, bezogen auf das Gesamtgewicht des pflanzenbasierten Milchersatzproduktes, erhöht werden kann. Es wurde gefunden, dass mit der in der EP-2 838 375 B1 beschriebenen Vorgehensweise derartig hohe Feststoffgehalte in Milchersatzprodukten nicht erreicht werden können.

Als pflanzenbasiertes Ausgangsmaterial kann jedes zum Verzehr geeignete Getreide-, Pseudo-Getreide-, Hülsenfrucht- und Nussmaterial eingesetzt werden. Beispielhaft seien Reis, Hafer, Dinkel, Hirse, Roggen, Einkorn, Soja, Ackerbohnen, Erdnüsse, Haselnüsse, Mandeln, oder Pseudogetreide wie Buchweizen genannt. Erfindungsgemäss bevorzugt ist Hafer als pflanzenbasiertes Ausgangsmaterial.

Das pflanzenbasierte Ausgangsmaterial kann üblichen Vorbehandlungsschritten wie Reinigung, Enthüllung (Schälen) oder Darren (kilning) unterworfen werden. Diese Schritte sind bekannt und müssen hier nicht weiter erläutert werden.

Im ersten Schritt des erfindungsgemässen Verfahrens wird das gegebenenfalls vorbehandelte pflanzenbasierte Ausgangsmaterial, beispielsweise Hafergrütze, gedarrte Haferkerne oder (Vollkorn-Haferflocken, im Bedarfsfall einer Trockenvermahlung unterzogen, um ganzes Getreidemehl, beispielsweise Hafermehl, zu erhalten. Es ist aber in gewissen Ausführungsformen der vorliegenden Erfindung auch möglich, von Kernen, Grütze, Schrot und ähnlichem Material auszugehen und hieraus eine Suspension herzustellen. Die Methoden zur Herstellung einer Suspension aus derartigen Ausgangsmaterialien sind dem Fachmann bekannt, beispielsweise mittels einer Kolloidmühle, einem Ultraturax, einer Ultraschallbehandlung oder mit einem Homogenisator.

Trockenvermahlungsverfahren und hierfür geeignete Mühlen sind bekannt.

Erfindungsgemäss bevorzugt wird die Trockenvermahlung mit einer Hammermühle, vorzugsweise einer Feinvermahlungs-Hammermühle (Pulverisierungs-Hammermühle) mit einer Granulationsspanne von 0,1 bis 2700 $\mu$m, durchgeführt. Derartige Hammermühlen sind bekannt und beispielsweise von der Firma Bühler erhältlich.

Vorzugsweise wird das pflanzenbasierte Ausgangsmaterial hierbei auf eine Partikelgrösse im Bereich von 0,1 bis 600 $\mu$m, vorzugsweise im Bereich von 1 bis 250 $\mu$m gemahlen.

Es ist kein Sieben erforderlich, um den ganzen Haferkern zu erhalten. Das erhaltene trockenvermahlte Material kann somit ungesiebt in den nächsten Verfahrensschritt überführt werden.

Dem gegebenenfalls trockenvermahlten Material können auf dieser Verfahrensstufe übliche Zusatzstoffe zugegeben werden. Als Beispiel seien Haferkleie, $\beta$-Glucane, Proteine oder Vitamine genannt.

Im nächsten Verfahrensschritt erfolgt die Herstellung einer wässrigen Suspension des gegebenenfalls trockenvermahlten Materials in Wasser unter Rühren bei einer Temperatur im Bereich von 20 bis 60°C in Gegenwart eines Enzyms. Mit anderen Worten wird das Material eingeweicht.

Das eingesetzte Wasser wird vor der Zugabe in Abhängigkeit von dem in diesem Schritt verwendeten Enzym auf eine gewünschte Temperatur eingestellt. Erfindungsgemäss bevorzugt wird das Wasser auf eine Temperatur im Bereich von 20 bis 60°C, bevorzugter 25 bis 50°C gebracht.

Es wird nun eine ausgewählt Menge des gegebenenfalls trockenvermahlten Materials sowie das gewünschte Enzyme zugegeben. Erfindungsgemäss bevorzugt wird eine derartige Menge des gegebenenfalls trockenvermahlten Materials zum Wasser, gegeben, dass die resultierende Suspension einen Feststoffanteil im Bereich von 30-70%, vorzugsweise 40-60% aufweist, bezogen auf das Gesamtgewicht der Suspension.

Gemäss einer weiteren Ausführungsform der vorliegenden Erfindung können auf dieser Verfahrensstufe übliche Zusatzstoffe zugegeben werden. Als Beispiel seien Haferkleie, $\beta$-Glucane, Proteine oder Vitamine genannt. Diese Zusatzstoffe können vorzugsweise direkt in die vorstehend beschrieben Mischung zugegeben werden.

Die genauen Mengen an gegebenenfalls trockenvermahltem Material, Wasser, Enzym(en) und gegebenenfalls Zusatzstoffen sind von der Art und den gewünschten Eigenschaften des herzustellenden Produkts abhängig und können vom Fachmann routinemässig eingestellt werden.

Die Herstellung der Suspension kann in jedem hierfür üblicherweise verwendeten Behälter, Gefäss oder Reaktor erfolgen, welcher eine Temperiereinheit wie eine Heizung und vorzugsweise einen Rührer aufweist.

Anschliessend wird die Temperatur der Mischung erhöht, bis die Aktivierungstemperatur des ausgewählten Enzyms erreicht ist. Im Fall von $\alpha$-Amylase liegt die Aktivierungstemperatur üblicherweise im Bereich von 70 bis 75 °C. Im Fall von $\beta$-Amylase liegt die Aktivierungstemperatur üblicherweise im Bereich von 60 bis 65 °C.

Die Hydrolyse des gegebenenfalls trockenvermahlten Materials wird bei der gewählten Aktivierungstemperatur des ausgewählten Enzyms unter Rühren für eine für die Hydrolyse ausreichende Zeit durchgeführt. Diese Zeit ist von den Bedingungen (Temperatur, Art und Menge an Enzym) sowie den gewünschten Produkteigenschaften (Viskosität, Süssigkeit) abhängig und liegt üblicherweise im Bereich von 1 min bis 2 h, vorzugsweise 30 bis 60 min. Anschliessend wird die Temperatur der Mischung verändert (abgekühlt oder weiter erhitzt) und das Enzym dadurch inaktiviert. Wird nur ein einziger derartiger Hydrolyseschritt durchgeführt, wird vorzugsweise auf Umgebungstemperatur abgekühlt, vorzugsweise auf 20°C.

Gemäss einer Ausführungsform der vorliegenden Erfindung kann der Hydrolyseschritt mehrmals und vorzugsweise mit unterschiedlichen Enzymen durchgeführt werden. In diesem Fall wird die Mischung nach einem vorgängigen Hydrolyseschritt vorzugsweise nicht auf Umgebungstemperatur abgekühlt, sondern verweilt bei einer höheren Temperatur, vorzugsweise im Bereich von 40 bis 60°C.

Gemäss einer bevorzugten Ausführungsform der vorliegenden Erfindung wird in Schritt b)

- eine Mischung aus gegebenenfalls trockenvermahltem Material, Wasser und $\alpha$-Amylase hergestellt,
- welche anschliessend unter Erhitzen auf die Enzymaktivierungstemperatur, vorzugsweise im Bereich von 70 bis 75 °C, und Rühren behandelt wird,
- anschliessend abgekühlt wird, vorzugsweise auf eine Temperatur im Bereich von 40 bis 60°C, und $\beta$-Amylase zugegeben wird, und

- anschliessend unter Erhitzen auf die Enzymaktivierungstemperatur, vorzugsweise im Bereich von 60 bis 65 °C, und Rühren behandelt und anschliessend das Enzym inaktiviert wird, vorzugsweise indem die Mischung abgekühlt wird.

Gemäss einer weiteren Ausführungsform der vorliegenden Erfindung kann während des Schritts b) eine Anpassung des pH-Wertes vorgenommen werden, um die Hydrolyse zu unterstützen beziehungsweise die Aktivität des oder der anwesenden Enzyme zu modifizieren.

Beispielsweise kann der pH-Wert der Mischung mittels bekannter Massnahmen (wie der Zugabe geeigneter Säuren oder Basen) auf einen Bereich von 4 bis 11, vorzugsweise 8 bis 9,5 eingestellt werden.

Sofern die Suspension dadurch einen pH-Wert im sauren oder alkalischen Bereich aufweist, wird vorzugsweise im weiteren Verlauf des Schritts b), vorzugsweise am Ende des Schritts b), eine Neutralisation mittels bekannter Massnahmen (wie der Zugabe geeigneter Säuren oder Basen) durchgeführt, sodass die Suspension nach dem Schritt b) einen pH-Wert von 7 aufweist.

Gemäss einer weiteren Ausführungsform der vorliegenden Erfindung wird in Schritt b) eine Zerkleinerung des Materials aus Schritt a) durchgeführt. Beispielsweise kann diese Zerkleinerung mit einem Rotor-Stator-Dispergiergerät, insbesondere einer Schneidmühle, erfolgen. Dies wird insbesondere für Ausführungsformen durchgeführt, bei denen das Material keiner Trockenvermahlung unterzogen wird.

Nach der Hydrolyse und Abkühlung wird die in Schritt b) erhaltenen Suspension einer Nassvermahlung unterzogen. Durch die Nassvermahlung wird eine Verringerung der Grösse der festen Bestandteile der Suspension auf eine derartige Grösse erreicht, dass sie sensorisch nicht mehr wahrnehmbar sind. Es hat sich erfindungsgemäss gezeigt, dass durch diese Bearbeitung wertvolle Bestandteile im Endprodukt verbleiben können, welche sonst als Okara in einem Nebenstrom abgetrennt würden. Das erfindungsgemäss erhaltene Milchersatzprodukt ist somit nährwertreicher und ökonomisch und ökologisch vorteilhat in der Herstellung.

Erfindungsgemäss wird die Nassvermahlung schonend durchgeführt, bei einer Temperatur unterhalb von 70°C, vorzugsweise im Bereich von 5 bis 65°c, bevorzugter 15 bis 60°C, und einem Druck von weniger als 3 bar, vorzugsweise 1 bis 3 bar und bevorzugter 1,5 bis 2 bar. Es hat sich gezeigt, dass eine unter diesen schonenden Bedingungen durchgeführte Nassvermahlung für die erfindungsgemässen Zwecke ausreichend ist. Das Material wird auf diese Weise keiner gossen Belastung ausgesetzt und behält seine vorteilhaften Eigenschaften.

Erfindungsgemäss bevorzugt wird die Nassvermahlung in Schritt c) mit einer Rührwerkskugelmühle durchgeführt.

Erfindungsgemäss bevorzugt wird bei der Nassvermahlung in Schritt c) eine spezifischen Energie im Bereich von 30 bis 1000 kWh/t, bevorzugt im Bereich von 40 bis 500 kWh/t und besonders bevorzugt im Bereich von 50 bis 400 kWh/t, in die in Schritt b) erhaltene wässrige Suspension eingebracht.

Erfindungsgemäss können herkömmliche Rührwerkskugelmühlen eingesetzt werden. Die Mühlenbauart kann horizontal oder vertikal sein. Es kann sich beispielsweise um eine Scheibenmühle, eine Stiftmühle oder eine Stift-Gegenstiftmühle handeln. Die Mahlkörperabtrennung kann beispielsweise als Sieb- oder Spaltabtrennung ausgestaltet sein. Der Rotor und/oder der Stator des Rührwerks kann aus Metall, Keramik oder Kunststoff/Polymer (zum Beispiel Polyurethan oder Polyamid) gefertigt sein.

Als Mahlkörper (Kugeln) können erfindungsgemäss bevorzugt Mahlkörper aus Keramik eingesetzt werden, z.B. mit Cer oder Yttrium stabilisiertes Zirkonoxid.

Die Grösse der Mahlkörper liegt erfindungsgemäss bevorzugt im Bereich von 0.03 bis 50 mm, vorzugsweise 0,1 bis 10 mm, und besonders bevorzugt 0,5 bis 5 mm. Im Fall einer mehrstufigen Vermahlung können in verschiedenen Mahlschritten unterschiedliche Mahlkörper (Art, Grösse) eingesetzt werden. Mit der Grösse der Mahlkörper können Eigenschaften wie Viskosität, Granulation, Erscheinungsbild des Endprodukts sowie sensorische Eigenschaften des Endprodukts wie gewünscht eingestellt werden.

Die Nassvermahlung kann erfindungsgemäss als Einfachpassage oder Mehrfachpassage durchgeführt werden, d.h. das Material wird einer oder gegebenenfalls mehreren, vorzugsweise 1 bis 4, bevorzugter 1 bis 2 Nassvermahlungsschritten unterzogen.

Eine Mehrfachpassage kann dadurch realisiert werden, dass das Material mehrfach durch eine Mühle geführt wird (Rezirkulation), oder alternativ durch mehrere nacheinander angeordnete Mühlen geführt wird. Im ersten Fall ist vorzugsweise der Auslass der einen Mühle mit ihrem Einlass verbunden, um eine Rezirkulation des Materials durch diese Mühle zu erreichen. Im zweiten Fall ist vorzugsweise der Auslass der jeweils vorgängig angeordneten Mühle mit dem Einlass der nachfolgenden Mühle verbunden. Es ist aber auch denkbar, das Material einem Auslass zu entnehmen und beispielsweise manuell in den Einlass derselben oder einen nachgeordneten Mühle einzuführen.

Die Nassvermahlung wird erfindungsgemäss bevorzugt derart durchgeführt, dass eine spezifischen Energie im Bereich von 30 bis 1000 kWh/t, bevorzugt im Bereich von 40 bis 500 kWh/t und besonders bevorzugt im Bereich von 50 bis 400 kWh/t, in die in Schritt b) erhaltene wässrige Suspension eingebracht wird. Im Fall einer Mehrfachpassage wird pro Passage diese spezifische Energie eingebracht.

Die eingetragene spezifische Energie ist abhängig von der Art der Art des zu vermahlenden Produkts (Grösse, Härte usw.) sowie den angewandten Verfahrensbedingungen (wie der Grösse der Mahlkörper).

Erfindungsgemäss ist die spezifische Energie bezogen auf die zu behandelnde Suspension.

Für eine Einfachpassage ist die spezifische Energie wie folgt definiert:

$$E\,[\text{kWh/t}] = \frac{\text{Netto Leistungseintrag [kW]}}{\text{Massenfluss [t/h]}}$$

Bei einer Mehrpassagenfahrweise ergibt sich die spezifische Energie aus der Summe der spezifischen Energie aller Passagen.

Bei einer Rezirkulationsfahrweise (Mehrfachpassage durch eine Mühle) ist die spezifische Energie wie folgt definiert:

$$E\,[\text{kWh/t}] = \frac{\text{Netto Leistungseintrag [kW]}}{\text{Batchgrössse [t]} \cdot \text{Prozesszeit [h]}}$$

Die Durchflussrate des Materials durch die Nassvermahlung ist abhängig von der Art der Nassvermahlungsmühle(n).

Erfindungsgemäss bevorzugt erfolgt die Nassvermahlung mit einer Umdrehungsgeschwindigkeit: 6 bis 15 m/s, vorzugsweise 7 bis 18 m/s, bevorzugter 8 bis 12 m/s.

Erfindungsgemäss kann die Nassvermahlung mit oder ohne Kühlung durchgeführt werden.

Das erfindungsgemässe Verfahren ist durch Einsatz von Trocken- und Nassvermahlung energetisch optimiert.

Das erfindungsgemäss Verfahren kann batchweise oder kontinuierlich durchgeführt werden. Bei einem kontinuierlichen Verfahren sind die einzelnen Komponenten der Anlage, in denen die Schritte a) bis c) durchgeführt werden, beispielsweise durch Leitungsrohre miteinander verbunden, sodass das Material ohne Unterbrechung durch die Anlage geführt werden kann. Der Durchfluss durch die Anlage kann auf bekannte Weise, beispielsweise mittels Pumpen und/oder Absperreinheiten wie Ventilen oder Schleusen, reguliert werden.

Die vorliegende Erfindung betrifft somit auch eine Anlage zur Durchführung des erfindungsgemässen Verfahren zur Herstellung eines pflanzenbasierten Milchersatzproduktes, umfassend

- eine Einheit zur Trockenvermahlung, vorzugsweise eine Hammermühle, besonders bevorzugt eine Feinvermahlungs-Hammermühle mit einer Granulationsspanne von 0,1 bis 2700 μm;
- eine Einheit zur Herstellung einer wässrigen Suspension aus einem trockenvermahltem Material; und
- eine Einheit zur Nassvermahlung, vorzugsweise eine Rührwerkskugelmühle.

Die Einheiten wurden bereits vorstehend in Bezug auf das Verfahren beschrieben.

Vorzugsweise ist die Anlage für einen kontinuierlichen Betrieb ausgelegt, beispielsweise indem die verschiedenen Einheiten durch Leitungsrohre miteinander verbunden sind, sodass das Material ohne Unterbrechung durch die Anlage geführt werden kann. Der Durchfluss durch die Anlage kann auf bekannte Weise, beispielsweise mittels Pumpen und/oder Absperreinheiten wie Ventilen oder Schleusen, reguliert werden.

Die genaue Ausgestaltung der Anlage kann anwenderspezifisch individuell angepasst werden. Diese betrifft unter anderem die Art und Dimensionen der einzelnen Einheiten, die Bereitstellung von Einheiten zur Temperatur- und Druckregulierung in den einzelnen Einheiten, sowie die Art und Zahl der zum Einsatz kommenden Zerkleinerungs- und Mahlkörper (Siebgrössen in den Hammermühlen, Kugeln in den Kugelmühlen).

Das mit dem erfindungsgemässen Verfahren erhaltene Produkt hat einen Feststoffanteil im Bereich von 30-70%, vorzugsweise 40-60%, bezogen auf das Gesamtgewicht des pflanzenbasierten Milchersatzproduktes. Es enthält den Feststoffanteil, vorzugsweise Okara-Anteil, welcher in herkömmlichen Produkten abgetrennt und anderweitig verwertet wird, und weist somit einen höheren Nährwert als herkömmliche Milchersatzprodukte auf.

Das mit dem erfindungsgemässen Verfahren erhaltene Produkt kann wie vorstehend ausgeführt hinsichtlich seiner äusseren und sensorischen Eigenschaften (beispielsweise Farbe, Textur, Gefühl im Mund) eingestellt werden, indem wie vorstehend ausgeführt die Verfahrensbedingungen (zum Beispiel Energieeintrag bei der Nassvermahlung) entsprechend variiert werden.

Das mit dem erfindungsgemässen Verfahren erhaltene Produkt kann beispielsweise aseptisch verpackt werden, um länger haltbar zu sein. Vorzugsweise kann das Material vor der aseptischen Verpackung üblichen Verfahrensschritten wie einer Hitzebehandlung (zur Abtötung von Keimen) und Homogenisierung unterzogen werden. Wird das erfindungsgemässe Verfahren mit Hafer als pflanzlichem Material durchgeführt, handelt es sich bei dem mit dem erfindungsgemässen Verfahren erhaltenen Produkt um die sogenannte Haferbasis.

Das mit dem erfindungsgemässen Verfahren erhaltene Produkt kann aber auch zu einem gewünschten Milchersatzprodukt weiterverarbeitet werden, indem beispielsweise übliche in diesem Bereich eingesetzte Zusatzstoffe wie Emulgatoren, Aromastoffe, Stabilisatoren mit dem aus dem erfindungsgemässen Verfahren erhaltenen Produkt vermischt werden und anschliessend übliche Verarbeitungsschritte wie eine Hitzebehandlung (zur Abtötung von keimen) und Homogenisierung durchgeführt werden. Wird das erfindungsgemässe Verfahren mit Hafer als pflanzlichem Material durchgeführt, kann es sich bei dem derart weiterverarbeiteten Produkt um ein Hafergetränk handeln.

Die vorliegende Erfindung wird anhand von nicht einschränkenden Beispielen und Figuren näher erläutert. Es zeigen:

Fig. 1     ein Flussdiagramm einer Ausführungsform des erfindungsgemässen Verfahrens zur Herstellung eines Milchersatzproduktes aus Vollkornmehl;

Fig. 2     ein Flussdiagramm einer Ausführungsform des erfindungsgemässen Verfahrens zur Herstellung eines Milchersatzproduktes aus Vollkorngetreide;

Fig. 3     ein Flussdiagramm einer Ausführungsform des erfindungsgemässen Verfahrens zur Herstellung eines Milchersatzproduktes aus Hülsenfrüchten oder Getreiden mit niedrigem Stärkegehalt oder Nüssen mit Schalen ohne enzymatische Behandlung.

In den Figuren haben gleiche Bezugszeichen dieselbe Bedeutung.

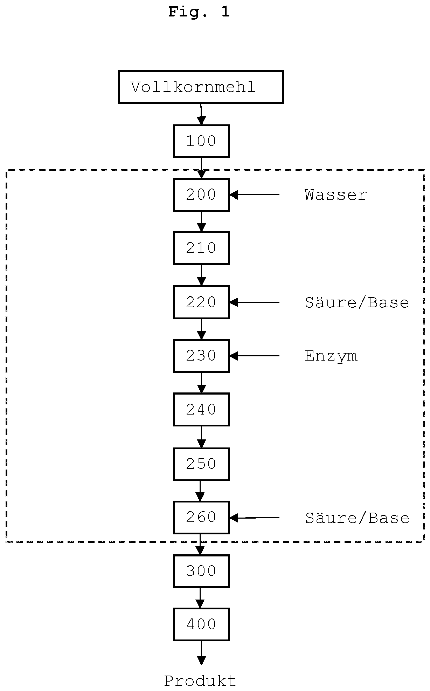

In Fig. 1 ist ein Flussdiagramm einer Ausführungsform des erfindungsgemässen Verfahrens zur Herstellung eines Milchersatzproduktes aus Vollkornmehl dargestellt.

In Schritt 100 wird eine Trockenvermahlung des eingesetzten Vollkornmehls wie vorstehend beschrieben durchgeführt.

In Schritt 200 werden in einem geeigneten Behälter, vorzugsweise Reaktor, das trockenvermahlene Vollkornmehl aus Schritt 100 und Wasser zusammengegeben. In Schritt 210 werden das das trockenvermahlene Vollkornmehl und das Wasser miteinander unter Rühren vermischt. In Schritt 220 wird durch Zugabe einer Säure oder Base eine Einstellung der Mischung auf einen gewünschten pH-Wert durchgeführt. In Schritt 230 wird ein gewünschtes Enzym wie α-Amylase zugegeben. In Schritt 240 wird die Suspension auf die Enzymaktivierungstemperatur erhitzt (Im Fall von α-Amylase auf etwa 70-75°C). Im Schritt 250 wird das Enzym durch Erhitzen oder Abkühlen der Suspension auf eine Temperatur ausserhalb der Enzymaktivierungstemperatur inaktiviert. In Schritt 260 wird der pH-Wert der Suspension durch Zugabe einer Säure oder Base auf den Neutralwert von 7 eingestellt.

In Schritt 300 wird die derart hergestellte Suspension in eine Rührwerksmühle überführt und wie vorstehend beschrieben nassvermahlen. Nach erfolgter Nassvermahlung wird das Produkt in Schritt 400 vorzugsweise abgekühlt und kann anschliessend aseptisch verpackt oder wie vorstehend beschrieben weiterarbeitet werden.

Auf analoge Weise kann auch ein Produkt aus einem Mehl aus Hülsenfrüchten oder Nüssen mit Schalen hergestellt werden.

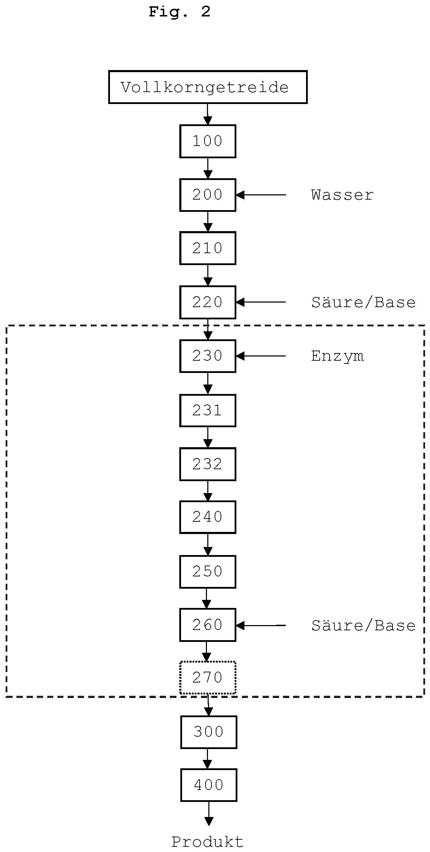

In Fig. 2 ist ein Flussdiagramm einer Ausführungsform des erfindungsgemässen Verfahrens zur Herstellung eines Milchersatzproduktes aus Vollkorngetreide gezeigt. Das Vollkorngetreide kann von Form von Körnern, Grütze, Schrot oder Flocken vorliegen.

Die Verfahrensführung entspricht der in Fig. 1 gezeigten Verfahrensführung. Allerdings werden in Schritt b) des erfindungsgemässen Verfahrens die Schritte 231 des Einweichens des Materials (längeres Stehenlassen) und 232 der Zerkleinerung des Materials (wie vorstehend beschrieben) durchgeführt, bevor im Schritt 240 die Suspension auf die Enzymaktivierungstemperatur erhitzt wird.

Weiterhin kann erforderlichenfalls ein Schritt 270 der weiteren Zerkleinerung des Materials (wie vorstehend beschrieben) durchgeführt werden, bevor das Material dem Schritt 300 der Nassvermahlung zugeführt wird.

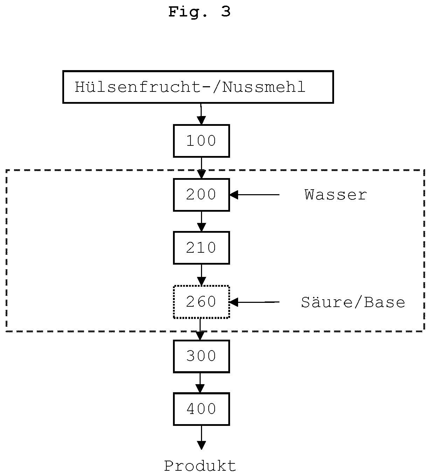

In Fig. 3 ist ein Flussdiagramm einer Ausführungsform des erfindungsgemässen Verfahrens zur Herstellung eines Milchersatzproduktes aus Hülsenfrüchten oder Nüssen mit Schalen ohne enzymatische Behandlung gezeigt. Dieses Verfahren unterscheidet sich von dem in Fig. 1 gezeigten Verfahren dadurch, dass auf die Schritte 220 bis 260 grundsätzlich verzichtet werden kann. Schritt 260 kann optional im Bedarfsfall durchgeführt werden.

**Patentansprüche**

1.  Verfahren zur Herstellung eines pflanzenbasierten Milchersatzproduktes mit einen Feststoffanteil im Bereich von 30-70%, bezogen auf das Gesamtgewicht des pflanzenbasierten Milchersatzproduktes, umfassend die Schritte

    a) Gegebenenfalls Trockenvermahlung eines pflanzenbasierten Ausgangsmaterials;
    b) Herstellung einer wässrigen Suspension des trockenvermahlten Materials in Wasser unter Rühren bei einer Temperatur im Bereich von 20 bis 60°C in Gegenwart eines Enzyms;

c) Nassvermahlung der in Schritt b) erhaltenen Suspension bei einer Temperatur unterhalb von 60°C und einem Druck von weniger als 3 bar.

2. Verfahren nach Anspruch 1, **dadurch gekennzeichnet, dass** das pflanzenbasierte Ausgangsmaterial ausgewählt ist aus der Gruppe bestehend aus Getreide-, Pseudo-Getreide-, Hülsenfrucht- und Nussmaterialien.

3. Verfahren nach einem der vorhergehenden Ansprüche, **dadurch gekennzeichnet, dass** die Trockenvermahlung mit einer Hammermühle, vorzugsweise einer Feinvermahlungs-Hammermühle mit einer Granulationsspanne von 0,1 bis 2700 μm, durchgeführt wird.

4. Verfahren nach einem der vorhergehenden Ansprüche, **dadurch gekennzeichnet, dass** das pflanzenbasierte Ausgangsmaterial in Schritt a) auf eine Partikelgrösse im Bereich von 0,1 bis 600 μm, vorzugsweise im Bereich von 1 bis 250 μm gemahlen wird.

5. Verfahren nach einem der vorhergehenden Ansprüche, **dadurch gekennzeichnet, dass** das gegebenenfalls trockenvermahlte Material aus Schritt a) ungesiebt in Schritt b) überführt wird.

6. Verfahren nach einem der vorhergehenden Ansprüche, **dadurch gekennzeichnet, dass** das Enzym in Schritt b) eine Amylase ist, vorzugsweise ausgewählt aus der Gruppe bestehend aus α-Amylase und β-Amylase.

7. Verfahren nach Anspruch 6, **dadurch gekennzeichnet, dass** in Schritt b)

   - eine Mischung aus gegebenenfalls trockenvermahltem Material, Wasser und α-Amylase hergestellt,
   - anschliessend unter Erhitzen auf die Enzymaktivierungstemperatur, vorzugsweise im Bereich von 70 bis 75 °C, und Rühren behandelt wird,
   - anschliessend abgekühlt, vorzugsweise auf eine Temperatur im Bereich von 40 bis 60°C, und β-Amylase zugegeben wird, und
   - anschliessend unter Erhitzen auf die Enzymaktivierungstemperatur, vorzugsweise im Bereich von 60 bis 65 °C, und Rühren behandelt und anschliessend das Enzym inaktiviert wird, vorzugsweise indem die Mischung abgekühlt wird.

8. Verfahren nach einem der vorhergehenden Ansprüche, **dadurch gekennzeichnet, dass** die Nassvermahlung in Schritt c) mit einer Rührwerkskugelmühle durchgeführt wird.

9. Verfahren nach einem der vorhergehenden Ansprüche, **dadurch gekennzeichnet, dass** die Nassvermahlung in Schritt c) eine spezifischen Energie im Bereich von 30 bis 1000 kWh/t, bevorzugt im Bereich von 40 bis 500 kWh/t und besonders bevorzugt im Bereich von 50 bis 400 kWh/t, in die in Schritt b) erhaltene wässrige Suspension eingebracht wird.

10. Verfahren nach einem der vorhergehenden Ansprüche, **dadurch gekennzeichnet, dass** nach dem Schritt a), vor oder während Schritt b) Zusatzstoffe zugegeben werden.

11. Verfahren nach einem der vorhergehenden Ansprüche, **dadurch gekennzeichnet, dass** in Schritt b) eine Substanz zur Einstellung des pH-Wertes zugegeben wird.

12. Verfahren nach Anspruch 11, **dadurch gekennzeichnet, dass** der Schritt b) derart durchgeführt wird, dass die hergestellte wässrige Suspension nach dem Schritt b) auf einen neutralen pH-Wert eingestellt ist.

13. Verfahren nach einem der vorhergehenden Ansprüche, **dadurch gekennzeichnet, dass** in Schritt b) ein Zerkleinerung des gegebenenfalls trockenvermahlten Materials durchgeführt wird.

14. Pflanzenbasiertes Milchersatzprodukt mit einen Feststoffanteil im Bereich von 30-70%, erhältlich mit dem Verfahren gemäss einem der Ansprüche 1 bis 13.

15. Pflanzenbasiertes Milchersatzprodukt nach Anspruch 14, **dadurch gekennzeichnet, dass** es sich um ein Haferbasiertes Milchersatzprodukt handelt.

Fig. 1

```
          ┌─────────────────┐
          │  Vollkornmehl   │
          └─────────────────┘
                   │
                   ▼
              ┌─────────┐
              │   100   │
              └─────────┘
                   │
    ┌ ─ ─ ─ ─ ─ ─ ─│─ ─ ─ ─ ─ ─ ─ ─ ─ ─ ─ ─ ─ ┐
    │              ▼
              ┌─────────┐
    │         │   200   │◄──────   Wasser       │
              └─────────┘
    │              │                            │
                   ▼
    │         ┌─────────┐                       │
              │   210   │
    │         └─────────┘                       │
                   │
    │              ▼                            │
              ┌─────────┐
    │         │   220   │◄──────   Säure/Base   │
              └─────────┘
    │              │                            │
                   ▼
    │         ┌─────────┐                       │
              │   230   │◄──────   Enzym
    │         └─────────┘                       │
                   │
    │              ▼                            │
              ┌─────────┐
    │         │   240   │                       │
              └─────────┘
    │              │                            │
                   ▼
    │         ┌─────────┐                       │
              │   250   │
    │         └─────────┘                       │
                   │
    │              ▼                            │
              ┌─────────┐
    │         │   260   │◄──────   Säure/Base   │
              └─────────┘
    └ ─ ─ ─ ─ ─ ─ ─│─ ─ ─ ─ ─ ─ ─ ─ ─ ─ ─ ─ ─ ┘
                   ▼
              ┌─────────┐
              │   300   │
              └─────────┘
                   │
                   ▼
              ┌─────────┐
              │   400   │
              └─────────┘
                   │
                   ▼
               Produkt
```

Fig. 2

```
        ┌─────────────────────┐
        │   Vollkorngetreide  │
        └─────────────────────┘
                   │
                   ▼
              ┌─────────┐
              │   100   │
              └─────────┘
                   │
                   ▼
              ┌─────────┐
              │   200   │◄────── Wasser
              └─────────┘
                   │
                   ▼
              ┌─────────┐
              │   210   │
              └─────────┘
                   │
                   ▼
              ┌─────────┐
              │   220   │◄────── Säure/Base
              └─────────┘
                   │
                   ▼
              ┌─────────┐
              │   230   │◄────── Enzym
              └─────────┘
                   │
                   ▼
              ┌─────────┐
              │   231   │
              └─────────┘
                   │
                   ▼
              ┌─────────┐
              │   232   │
              └─────────┘
                   │
                   ▼
              ┌─────────┐
              │   240   │
              └─────────┘
                   │
                   ▼
              ┌─────────┐
              │   250   │
              └─────────┘
                   │
                   ▼
              ┌─────────┐
              │   260   │◄────── Säure/Base
              └─────────┘
                   │
                   ▼
              ┌┈┈┈┈┈┈┈┈┐
              ┊   270   ┊
              └┈┈┈┈┈┈┈┈┘
                   │
                   ▼
              ┌─────────┐
              │   300   │
              └─────────┘
                   │
                   ▼
              ┌─────────┐
              │   400   │
              └─────────┘
                   │
                   ▼
               Produkt
```

Fig. 3

```
┌─────────────────────────────┐
│  Hülsenfrucht-/Nussmehl      │
└─────────────────────────────┘
              │
              ▼
          ┌───────┐
          │  100  │
          └───────┘
              │
              ▼
          ┌───────┐
          │  200  │◄──────── Wasser
          └───────┘
              │
              ▼
          ┌───────┐
          │  210  │
          └───────┘
              │
              ▼
          ┌┄┄┄┄┄┄┄┐
          ┊  260  ┊◄──────── Säure/Base
          └┄┄┄┄┄┄┄┘
              │
              ▼
          ┌───────┐
          │  300  │
          └───────┘
              │
              ▼
          ┌───────┐
          │  400  │
          └───────┘
              │
              ▼
           Produkt
```

Europäisches
Patentamt

European
Patent Office

Office européen
des brevets

# EUROPÄISCHER RECHERCHENBERICHT

Nummer der Anmeldung

EP 24 17 5928

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2023 109092 A1 (STEINECKER GMBH [DE]) 26. Oktober 2023 (2023-10-26) * Absätze [0005], [0027], [0028], [0030], [0033]; Ansprüche 1,4 * ----- | 1-15 | INV. A23C11/10 A23L7/104 |
| X | CA 3 225 880 A1 (FAZER AB OY KARL [FI]) 23. Februar 2023 (2023-02-23) * Ansprüche 1,6,10 * ----- | 1,14 | |
| X | US 2022/039417 A1 (DIONISI FABIOLA [CH] ET AL) 10. Februar 2022 (2022-02-10) * Absätze [0123] - [0125] * ----- | 1,14 | |
| A | US 2023/232850 A1 (SAGALOWICZ LAURENT [CH] ET AL) 27. Juli 2023 (2023-07-27) * Absätze [0129] - [0138] * ----- | 1-15 | |
| A | US 2012/034341 A1 (CHEN KWAN-HAN [TW] ET AL) 9. Februar 2012 (2012-02-09) * Ansprüche 1,3 * ----- | 1-15 | |

RECHERCHIERTE
SACHGEBIETE (IPC)

A23C
A23L

Der vorliegende Recherchenbericht wurde für alle Patentansprüche erstellt

| Recherchenort | Abschlußdatum der Recherche | Prüfer |
|---|---|---|
| Den Haag | 18. Oktober 2024 | Galleiske, Anke |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
......................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 17 5928

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-10-2024

| Im Recherchenbericht angeführtes Patentdokument | Datum der Veröffentlichung | Mitglied(er) der Patentfamilie | Datum der Veröffentlichung |
|---|---|---|---|
| DE 102023109092 A1 | 26-10-2023 | KEINE | |
| CA 3225880 A1 | 23-02-2023 | AU 2022329464 A1 | 07-03-2024 |
| | | CA 3225880 A1 | 23-02-2023 |
| | | EP 4387469 A1 | 26-06-2024 |
| | | FI 20215860 A1 | 17-02-2023 |
| | | WO 2023021240 A1 | 23-02-2023 |
| US 2022039417 A1 | 10-02-2022 | CN 113382638 A | 10-09-2021 |
| | | EP 3897174 A1 | 27-10-2021 |
| | | JP 2022514554 A | 14-02-2022 |
| | | US 2022039417 A1 | 10-02-2022 |
| | | WO 2020127358 A1 | 25-06-2020 |
| US 2023232850 A1 | 27-07-2023 | AU 2021298088 A1 | 02-02-2023 |
| | | BR 112022026304 A2 | 17-01-2023 |
| | | CA 3182137 A1 | 30-12-2021 |
| | | CL 2022003642 A1 | 14-07-2023 |
| | | CN 115835783 A | 21-03-2023 |
| | | CN 115915964 A | 04-04-2023 |
| | | EP 4171261 A1 | 03-05-2023 |
| | | JP 2023530948 A | 20-07-2023 |
| | | US 2023232850 A1 | 27-07-2023 |
| | | US 2023240321 A1 | 03-08-2023 |
| | | WO 2021259802 A1 | 30-12-2021 |
| | | WO 2021259812 A1 | 30-12-2021 |
| US 2012034341 A1 | 09-02-2012 | TW 201105251 A | 16-02-2011 |
| | | US 2012034341 A1 | 09-02-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2021144005 A1
- EP 2838375 B1